# FASCICULE DE BREVET EUROPEEN

(11) **EP 1 610 940 B1**
(45) Date de publication et mention de la délivrance du brevet: **17.06.2015**
(21) Numéro de dépôt: 04742315.7
(22) Date de dépôt: 22.03.2004
(51) Int. Cl.: B29C 63/00, B32B 17/10, B29L 31/00, B29C 63/02, B29K 709/08

(54) **PROCEDE POUR DEPOSER DES FILMS FONCTIONNELS SUR DES SUBSTRATS TELS QUE DES PLAQUES DE VERRE, ET MACHINE DE PELLICULAGE POUR LA MISE EN OEUVRE DE CE PROCEDE**
VERFAHREN ZUR BESCHICHTUNG FUNKTIONELLER FILME AUF SUBSTRATEN WIE GLASSPLATTEN UND BESCHICHTUNGSVORRRICHTUNG ZUR DURCHFÜHRUNG DES VERFAHRENS
METHOD OF DEPOSITING FUNCTIONAL FILMS ON SUBSTRATES SUCH AS GLASS SHEETS AND FILM-COATING MACHINE FOR IMPLEMENTING SAID METHOD

(30) Priorité: 21.03.2003 FR 0303611
(43) Date de publication de la demande: 04.01.2006
(73) Titulaire: SAINT-GOBAIN GLASS FRANCE, 92400 Courbevoie (FR)
(72) Inventeur: DEMARS, Yves, F-60600 Agnetz (FR); DOUCHE, Jean-Pierre, F-60150 Le Plessis Brion (FR)
(74) Mandataire: Teyssedre, Laurent
(86) Numéro de dépôt international: PCT/FR2004/000705
(87) Numéro de publication internationale: WO 2004/085135

(56) Documents cités:
- EP-A- 0 547 327
- DE-A1- 2 118 570
- GB-A- 2 033 947
- US-A- 3 971 691
- US-A- 4 264 400
- PATENT ABSTRACTS OF JAPAN vol. 1998, no. 01, 30 janvier 1998 (1998-01-30) -& JP 09 226007 A (HONDA MOTOR CO LTD), 2 septembre 1997 (1997-09-02)

## Description

La présente invention porte sur un procédé et sur une machine de pelliculage permettant de déposer au moins un film fonctionnel sur au moins une partie d'une face ou des deux faces de substrats plans ou cintrés.

Entre autres, la présente invention concerne la protection de surfaces fragiles de substrats de types plaques, afin de ne pas les abîmer par choc, rayures, etc. lors de leur transport du site de production vers un site d'utilisation ou de montage ainsi que lors dudit montage.

En particulier, la présente invention concerne la protection de surfaces de plaques de verre, notamment de verre dont au moins une face a reçu un traitement, par exemple par l'application d'une couche fonctionnelle, qu'il faut maintenir en l'état pendant toute la manipulation et le transport depuis le lieu de fabrication jusqu'au site de montage où la plaque doit la plupart du temps être découpée pour les différentes dimensions de vitres à poser.

Actuellement, on protège les plaques de verre [de type pleine longueur float (plf) ou découpe largeur float (dlf)] par des films en matière plastique, auto-collants, pelables, que l'on applique sur lesdites plaques qui défilent horizontalement les unes à la suite des autres, lesdites plaques étant écartées entre elles d'une faible distance, de l'ordre de 20 à 25 mm. Cette méthode de protection est assez malcommode.

En effet, les dimensions des films disponibles dans le commerce et celles des plaques ou plateaux de verre sont telles qu'il est souvent nécessaire d'utiliser deux bobines de film au lieu d'une, les deux films se recouvrant dans la région médiane de la plaque.

De plus, dans le cas où l'on ne souhaite pas protéger les bords de la plaque, on peut indiquer que, si l'on sait démarrer le pelliculage à une distance d'un premier bord transversal de la plaque, on ne peut pas en pratique arrêter le pelliculage à une distance donnée du bord opposé ou à la limite de ce bord. Dans ces conditions, l'on est contraint de coller le film sur la plaque suivante puis de découper le film entre les deux plaques. Il en résulte que ce pelliculage est une opération qui demande du temps.

Un autre inconvénient majeur du procédé actuel est qu'il conduit nécessairement à revêtir la totalité ou la quasi-totalité de la plaque (en tout cas, comme on l'a évoqué ci-dessus, jamais en réservant les quatre bordures de la plaque). Comme les plaques, en particulier les plaques de verre, sont destinées la plupart du temps à être découpées sur le lieu de montage pour constituer les vitres à poser, l'opérateur est contraint de retirer le film avant d'appliquer sa molette de découpe. La plaque n'est donc pas effectivement protégée jusqu'au moment même de la pose, les risques d'abîmer la surface du verre pendant la découpe et la pose n'étant pas négligeables.

Ainsi, l'actuel procédé de pelliculage n'est donc pas satisfaisant car il ne prend pas en compte les différents aspects suivantes :
(1) le pelliculage (ou filmage) devrait permettre de réserver n'importe où sur la surface de la plaque des zones non recouvertes, afin notamment de faciliter le travail ultérieur de découpe de la plaque, les emplacements de ces zones non recouvertes pouvant si on le souhaite être prévus à l'avance en fonction de la destination des plaques, ce, pour des séries de plaques préparées en atelier ou en usine ;
(2) le pelliculage devrait pouvoir être effectué dans des temps beaucoup plus courts , si possible en temps masqué ; en effet, cette opération de pelliculage s'intègre dans une chaîne de fabrication, la machine de pelliculage devant avantageusement être une machine automatique, assurant directement l'application parfaite du film, sans bulles d'air et sans opération manuelle de découpe du film comme c'est le cas avec le procédé connu ; et
(3) les plaques devraient avantageusement pouvoir être présentées au pelliculage non plus horizontalement mais verticalement ou légèrement inclinées par rapport à la verticale, afin de diminuer l'encombrement au sol.

La présente invention permet de répondre à l'objectif (1) précité et, dans des modes de réalisation avantageux de celle-ci, aux objectifs (2) et (3).

La présente invention a donc d'abord pour objet un procédé selon la revendication 1.

On fait avantageusement défiler successivement les substrats selon leur plan ou plan moyen, en les amenant au cours de leur défilement un à un dans la station de pelliculage.

Le déroulement des bobines est provoqué par le défilement du substrat et/ou par une commande du déroulement de la bobine.

Conformément à un premier mode de réalisation du procédé selon l'invention, on utilise un ensemble applicateur comportant un axe sur lequel au moins une bobine de film est montée, permettant ainsi d'appliquer sur une face du substrat autant de bandes ou laizes parallèles à la direction de défilement du substrat qu'il y a de bobines, le début et la fin de chaque bande étant positionnés de façon précise sur ledit substrat, lesdites bandes étant espacées l'une de l'autre, et l'application des bandes pouvant être arrêtée et reprise sur un même substrat au cours de son défilement.

Conformément à un second mode de réalisation du procédé selon l'invention, on utilise un ensemble applicateur comportant au moins deux axes parallèles, chaque axe portant au moins une bobine, au moins une bobine portée par un axe étant en position décalée par rapport à au moins une bobine portée par l'axe voisin, permettant ainsi d'appliquer sur une face du substrat autant de bandes ou laizes parallèles à la direction de défilement de substrat qu'il y a de bobines, le début et la fin de chaque bande étant positionnés de façon précise sur ledit substrat, lesdites bandes pouvant se chevaucher selon l'emplacement de deux bobines voisines sur leurs deux axes, et l'application des bandes pouvant être arrêtée et reprise sur un même substrat au cours de son défilement.

Ainsi, cette technique de filmage par laizes avec recouvrement ou non permet d'accéder à un margeage en périphérie d'une plaque de verre sans découpe ultérieure du film pour la mise en oeuvre dans un châssis vitré avec parclose, sans film pincé sous la parclose qui ne permet plus de décacheter le film de la vitre après pose.

Les techniques traditionnelles de filmage imposent une découpe en extrémité de verre, ce qui impose une reprise pour le margeage avec un outil coupant qui en général vient rayer la surface du verre.

La protection par film peut par ailleurs permettre d'éviter de déposer des intercalaires de protection nécessaires pour les phases de transport et de manutention.

On peut faire passer les substrats dans la station de pelliculage verticalement ou dans une position légèrement inclinée par rapport à la verticale, ou encore horizontalement.

On peut utiliser un film fonctionnel pelable, adhésivé, partiellement adhésivé, adhésivé sur des zones pré-découpées, ou de type décalcomanie. Le film fonctionnel peut par ailleurs être choisi parmi les films de protection, les films décoratifs, les films comportant des informations et les films de renforcement mécanique.

Les films utilisables sont notamment des films bien connus de l'homme du métier, non polluants, ayant une tenue aux intempéries ou aux UV, tels que les films en PET, polyéthylène basse densité, polypropylène éventuellement revêtu d'une couche adhésive acrylique, les films acryliques, etc.. Ces films, laissés en place lors de la pose, pourront utilement constituer des supports d'informations (conditions de pose ou d'entretien) et/ou des supports publicitaires.

On peut réaliser le revêtement de plaques de verre, en particulier de plaques de verre monolithique, feuilleté ou pour vitrages multiples, présentant sur au moins une face une couche fonctionnelle, telle qu'une couche anti-salissures, une couche anti-bris, un film de surfaçage, lesdites plaques de verre étant planes ou à faces courbes ou cintrées, lesdites plaques étant destinées à former des vitres ou à être découpées pour obtenir des vitres ou étant destinées à former des pare-brise ou des vitres d'automobiles.

En particulier, on peut réaliser le revêtement de plaques de verre planes destinées à être découpées pour former des vitres, caractérisé par le fait que l'on réalise l'application de laizes de film protecteur pelable selon le premier mode de réalisation précité, afin que les zones non revêtues soient disposées selon un quadrillage, chaque zone revêtue par une laize correspondant au clair de vue d'une vitre, et les zones non revêtues étant destinées à permettre la découpe directe du verre formant les bordures des vitres destinées à être introduites dans les feuillures des châssis et à être cachées à la vue par des parcloses.

Dans le cas où l'on effectue le revêtement de substrats cintrés, on peut avantageusement choisir un film dont les caractéristiques de capacité d'allongement permettent son application sur toutes les régions d'application prévues et/ou qu'on règle la largeur des bobines et, par conséquent, des laizes en fonction du rayon de courbure, la largeur des laizes étant d'autant plus faible que le rayon de courbure est faible.

Le procédé selon la présente invention peut également comprendre les opérations consistant à :
- définir pour chacun des substrats, en fonction de sa destination et sur au moins une face externe de celui-ci, la ou les régions devant recevoir un film et la ou les régions ne nécessitant pas d'être revêtues par le film ;
- faire passer lesdits substrats successivement dans la station de pelliculage et commander pour chacun d'eux l'application de film dans les régions destinées à recevoir un tel film ; et
- recueillir les substrats ainsi revêtus.

En particulier, on peut réaliser par calcul informatisé une optimisation du positionnement du film sur les différents substrats de la succession de substrats en fonction de la dimension des substrats et de la position relative des régions devant être revêtues et des régions ne devant pas être revêtues.

On peut réaliser l'optimisation également en fonction de l'équipage des bobines et des différentes bobines que ledit équipage est susceptible de recevoir.

La présente invention porte également sur une machine de pelliculage selon la revendication 14.

Un ensemble applicateur de film peut comporter un ou deux axes distincts parallèles entre eux, chaque axe portant au moins une bobine.

Les bobines peuvent être activables individuellement ou par groupes de bobines.

L'ensemble applicateur du film peut être mobile en approche ou éloignement des substrats à revêtir, ledit ensemble applicateur pouvant être déplaçable en translation pour s'ajuster aux dimensions du substrat ou de la hauteur de margeage du film.

Les bobines peuvent être montées de telle sorte que leur amorce vienne s'appliquer contre la face du substrat à revêtir après passage sur un rouleau applicateur.

A chaque rouleau applicateur peut être associée une buse d'aspiration escamotable disposée en aval dudit rouleau du côté opposé au substrat, de telle sorte que l'amorce soit aspirée contre ladite buse pour être maintenue prête à être appliquée contre le substrat, la désactivation de ladite aspiration commandant l'application contre le substrat de l'amorce du film notamment par une face adhésive de celui-ci ou du fait de son caractère électrostatique.

Le moyen de découpe du film peut être constitué par un fil chaud escamotable lorsqu'il n'est pas en service, monté du côté opposé au substrat.

A chaque bobine peut être associé un rouleau d'application du film contre le substrat après la découpe dudit film.

Chaque bobine peut faire partie d'un module d'application de film comportant un rouleau de tension du film déroulé de la bobine avant passage sur le rouleau applicateur, un dispositif de chargement d'une nouvelle bobine de film et de reboutage automatique du film étant avantageusement intégré audit module.

Au moins un axe de l'ensemble applicateur peut être apte à recevoir différents jeux de bobines de différentes largeurs de bande.

Pour mieux illustrer l'objet de la présente invention, on va en déduire ci-après, à titre indicatif et non limitatif, un mode de réalisation particulier avec référence au dessin annexé.

Sur ce dessin :
- la Figure 1 est un schéma fonctionnel d'une machine de pelliculage selon l'invention, vue de face ;
- la Figure 2 est une vue schématique en élévation latérale partielle de la machine de la Figure 1 ; et
- la Figure 3 est, à plus grande échelle, une vue schématique dans un plan horizontal, d'un module d'application du film protecteur pelable.

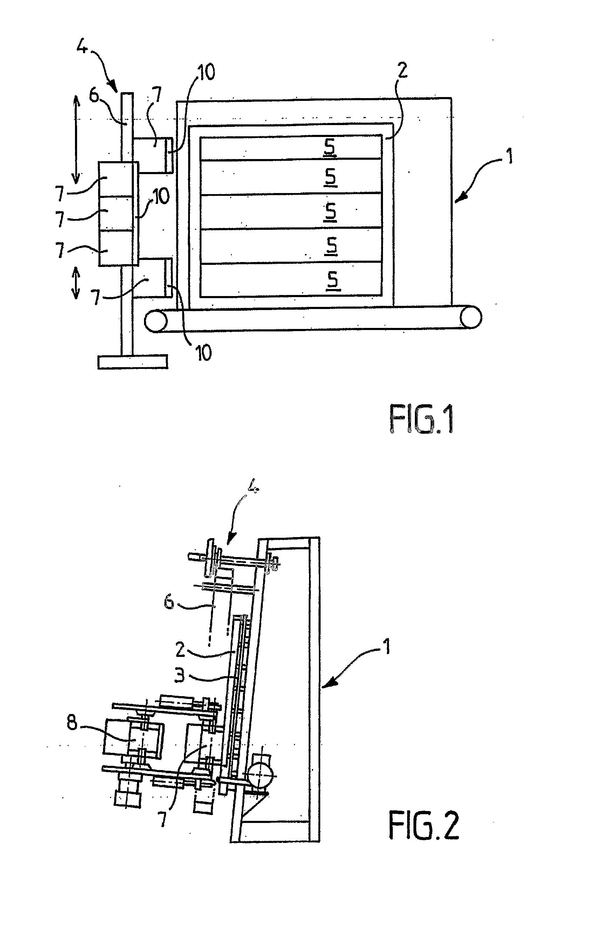

Si l'on se réfère aux Figures 1 et 2, on peut voir que l'on a représenté un schéma général d'une machine de pelliculage selon l'invention qui comporte un châssis 1 de support et de transfert de plaques de verre 2, le châssis 1 présentant à l'avant un plan d'appui 3 à coussin d'air incliné vers l'arrière d'un angle de l'ordre de 6° par rapport à la verticale. Le transfert des plaques 2 s'effectue par un système d'entraînement par courroies ou galets.

La machine comporte également un dispositif 4 applicateur de bandes horizontales de film 5. Le dispositif 4 comporte une poutre 6 ayant la même inclinaison que les plaques 2 qui sont transférées devant lui.

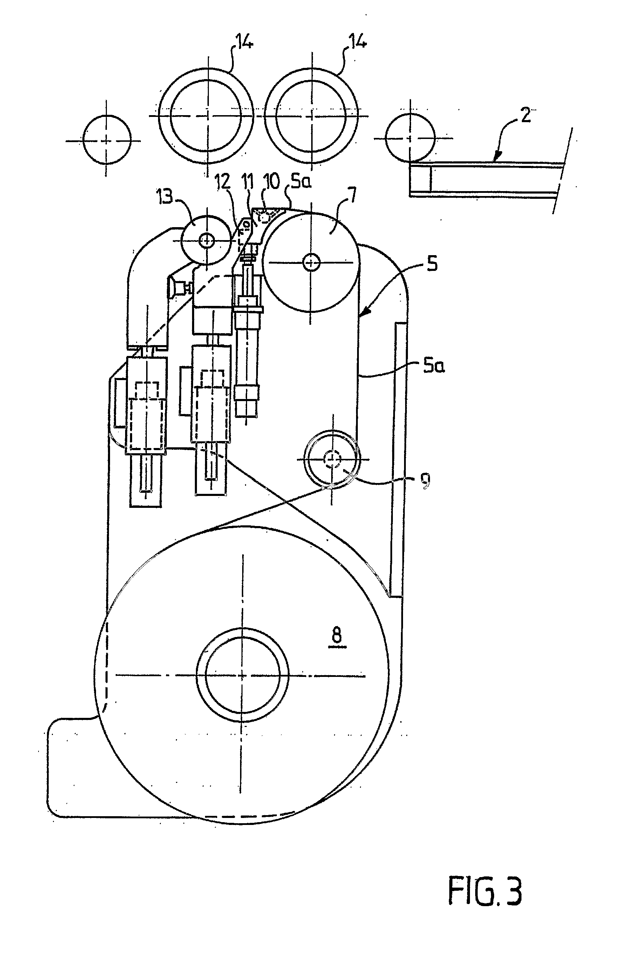

Sur la poutre 6, sont montés à des hauteurs différentes plusieurs modules d'application comportant chacun un rouleau applicateur 7 comme représenté sur la Figure 3.

Les rouleaux applicateurs 7 supérieur et inférieur, sont réglables en hauteur en fonction des marges horizontales inférieure et supérieure non protégées que l'on veut réserver sur les plaques de verre 2. Dans l'exemple représenté, le rouleau inférieur est réglable sur une plus faible course.

Les rouleaux intermédiaires sont au nombre de trois ; ils ne sont pas réglables dans l'exemple représenté, leur écartement étant fixé à l'avance.

Si l'on se réfère à la Figure 3, on peut voir que sur un rouleau applicateur 7, on a fait passer le film 5 dont la surface externe 5a est celle qui est adhésive, ledit film étant déroulé à partir d'une bobine 8 et passant sur un rouleau embarreur 9 de tension du film. Il est ainsi constitué un bout libre 10 de film 5 qui est présenté face à la plaque 2 à protéger par les bandes de film (la plaque 2 est ici un double vitrage) qui est transféré devant lui.

Le bout libre 10 est maintenu face à la plaque 2 par une buse d'aspiration 11 en aval du rouleau applicateur 7. Cette buse 11 est escamotable lorsqu'elle n'est pas en service, le bout libre 10 étant alors libéré pour venir s'appliquer contre la plaque 2.

Egalement, en aval de la buse 11, sont prévus successivement un fil chaud 12 de découpe du film, également avec possibilité d'escamotage, et un rouleau 13 d'application après découpe du film, dont le rôle est d'éliminer toutes bulles d'air entre film et plaque.

Des contre-rouleaux 14 sont montés en regard des rouleaux 7 et 13 pour favoriser l'application du film.

Le module d'application de la Figure 3 est capable de recevoir des bobines de hauteurs différentes. Le dispositif d'aspiration est conçu et dimensionné pour accepter ces variations de hauteur. Ce module peut être monté sur un rail pour s'ajuster aux dimensions de la plaque de verre ou de la hauteur de margeage du film.

Un cycle de laminage sur pelliculeuse verticale pourrait être décrit comme suit :
Etape 1: Le bout du film est pris par la bande aspirante ; le vide est fait sur la ventouse ; le verre est chargé sur le convoyeur avant la cellule de détection des bords de verre ; les rouleaux d'application sont reculés ;
Etape 2: avance du verre ; le bord avant est détecté par la cellule ;
Etape 3: avance du verre de la distance « cellule/bord du film » ;
Etape 4: mise en pression des rouleaux sur le verre ; arrêt du vide
Etape 5: recul du verre pour collage du début du film Etape 6: avance du verre (laminage du film) ; détection du bord arrière pour la cellule
Etape 7: avance du verre ; recul du module
Etape 8: avance du bord arrière du verre devant le fil coupant ; aspiration du film par la ventouse
Etape 9: coupe du film avec le fil chaud
Etape 10: recul du fil chaud
Etape 11: évacuation du verre, fin du laminage avec le petit rouleau

## Revendications

1. Procédé pour déposer au moins un film fonctionnel (5) sur au moins une partie d'une face ou des deux faces de substrats (2) plans ou cintrés qui sont des plaques de verre, le procédé comprenant les étapes suivante :
- on amène les substrats un à un dans une station de pelliculage pour les faire défiler dans celle-ci selon leur plan ou plan moyen, un ensemble (4) applicateur de film comprenant au moins un axe qui est perpendiculaire au sens de défilement et parallèle au plan de défilement et sur lequel est montée au moins une bobine (8) de film (5), étant disposé dans ladite station de pelliculage,
- dans cette dernière, on amène l'amorce (10) du film (5) de chacune des bobines (8) à être appliquée et maintenue sur une face du substrat (2) à un emplacement choisi, lesdites bobines (8) étant au moins en partie ajustables en hauteur,
- on provoque le déroulement de la ou des bobines (8) de film en vue de l'application du film (5) en laize(s) sur le substrat (2) en défilement, puis
- on découpe le ou les films (5) à un moment choisi, et on maintient la nouvelle amorce (10) de film pour qu'elle soit prête à être appliquée à l'emplacement choisi sur le même substrat, ou sur un substrat suivant,
la largeur de bande de chacune des bobines et leur emplacement sur les axes étant choisis en fonction des régions des substrats à recouvrir par les films, ledit procédé aboutissant à un margeage en périphérie des plaques de verre sans découpe ultérieure du film.

2. Procédé selon la revendication 1, **caractérisé par le fait qu'**on utilise un ensemble applicateur (4) comportant un axe sur lequel au moins une bobine (8) de film (5) est montée, permettant ainsi d'appliquer sur une face du substrat (2) autant de bandes ou laizes parallèles à la direction de défilement du substrat (2) qu'il y a de bobines (8), le début et la fin de chaque bande étant positionnés de façon précise sur ledit substrat, lesdites bandes étant espacées l'une de l'autre, et l'application des bandes pouvant être arrêtée et reprise sur un même substrat (2) au cours de son défilement.

3. Procédé selon la revendication 1, **caractérisé par le fait qu'**on utilise un ensemble applicateur (4) comportant au moins deux axes parallèles, chaque axe portant au moins une bobine (8), au moins une bobine (8) portée par un axe étant en position décalée par rapport à au moins une bobine (8) portée par l'axe voisin, permettant ainsi d'appliquer sur une face du substrat autant de bandes ou laizes parallèles à la direction de défilement de substrat qu'il y a de bobines (8), le début et la fin de chaque bande étant positionnés de façon précise sur ledit substrat (2), lesdites bandes pouvant se chevaucher selon l'emplacement de deux bobines voisines sur leurs deux axes, et l'application des bandes pouvant être arrêtée et reprise sur un même substrat au cours de son défilement.

4. Procédé selon l'une des revendications 1 à 3, **caractérisé par le fait que** l'on fait passer les substrats (2) dans la station de pelliculage verticalement ou dans une position légèrement inclinée par rapport à la verticale.

5. Procédé selon l'une des revendications 1 à 3, **caractérisé par le fait que** l'on fait passer les substrats (2) horizontalement dans la station de pelliculage.

6. Procédé selon l'une des revendications 1 à 5, **caractérisé par le fait que** l'on utilise un film fonctionnel pelable, adhésivé, partiellement adhésivé, adhésivé sur des zones pré-découpées, ou de type décalcomanie.

7. Procédé selon l'une des revendications 1 à 6, **caractérisé par le fait que** l'on utilise un film fonctionnel choisi parmi les films de protection, les films décoratifs, les films comportant des informations et les films de renforcement mécanique.

8. Procédé selon l'une des revendications 1 à 7, **caractérisé par le fait que** l'on réalise le revêtement de de plaques de verre monolithique, feuilleté ou pour vitrages multiples, présentant sur au moins une face une couche fonctionnelle, telle qu'une couche anti-salissures, une couche anti-bris, un film de surfaçage, lesdites plaques de verre étant planes ou à faces courbes ou cintrées, lesdites plaques étant destinées à former des vitres ou à être découpées pour obtenir des vitres ou étant destinées à former des pare-brise ou des vitres d'automobiles.

9. Procédé selon la revendication 8, dans lequel on réalise le revêtement de plaques de verre planes destinées à être découpées pour former des vitres, **caractérisé par le fait que** l'on réalise l'application de laizes de film protecteur pelable de la manière définie à la revendication 2 afin que les zones non revêtues soient disposées selon un quadrillage, chaque zone revêtue par une laize correspondant au clair de vue d'une vitre, et les zones non revêtues étant destinées à permettre la découpe directe du verre formant les bordures des vitres destinées à être introduites dans les feuillures des châssis et à être cachées à la vue par des parcloses.

10. Procédé selon la revendication 8, dans lequel on effectue le revêtement de substrats cintrés, **caractérisé par le fait que** l'on choisit un film dont les caractéristiques de capacité d'allongement permettent son application sur toutes les régions d'application prévues et/ou qu'on règle la largeur des bobines et, par conséquent, des laizes en fonction du rayon de courbure, la largeur des laizes étant d'autant plus faible que le rayon de courbure est faible.

11. Procédé selon l'un des revendications 1 à 10, **caractérisé par le fait qu'**il comprend les opérations consistant à :
- définir pour chacun des substrats, en fonction de sa destination et sur au moins une face externe de celui-ci, la ou les régions devant recevoir un film et la ou les régions ne nécessitant pas d'être revêtues par le film ;
- faire passer lesdits substrats successivement dans la station de pelliculage et commander pour chacun d'eux l'application de film dans les régions destinées à recevoir un tel film ; et
- recueillir les substrats ainsi revêtus.

12. Procédé selon la revendication 11, **caractérisé par le fait que** l'on réalise par calcul informatisé une optimisation du positionnement du film sur les différents substrats de la succession de substrats en fonction de la dimension des substrats et de la position relative des régions devant être revêtues et des régions ne devant pas être revêtues.

13. Procédé selon la revendication 12, **caractérisé par le fait que** l'on réalise l'optimisation également en fonction de l'équipage des bobines et des différentes bobines que ledit équipage est susceptible de recevoir.

14. Machine de pelliculage pour la mise en oeuvre du procédé tel que défini à l'une des revendication 1 à 13, comprenant :
- une structure (1) de support et de transfert successif des plaques à protéger, suivant leur plan ou leur plan moyen ;
- un ensemble (4) applicateur de film comprenant au moins un axe perpendiculaire au sens de défilement prévu des substrats et parallèle au plan de défilement, axe sur lequel au moins une bobine (8) de film est susceptible d'être montée de telle sorte que l'amorce du film (5) vienne s'appliquer contre la face du substrat (2) à revêtir lors du transfert de celle-ci, ledit ensemble (4) étant apte à recevoir pour chaque substrat (2) en cours de transfert le nombre de bobines (8) nécessaire et de largeur de bande choisie pour former sur chaque substrat (2) le revêtement en laizes prévu, ;
- des moyens pour commander à chaque moment voulu l'application sur le substrat de l'amorce (10) du film (5) d'une bobine ; et
- des moyens de coupe de la bande en fin d'application à chaque moment voulu, des moyens étant prévus pour maintenir la nouvelle amorce formée après la coupe de la bande afin qu'elle soit prête à être à nouveau appliquée, la machine étant **caractérisée en ce que** lesdites bobines (8) sont au moins en partie ajustables en hauteur pour former sur chaque substrat (2) le revêtement en laizes prévu

15. Machine selon la revendication 14, **caractérisée par le fait qu'**un ensemble (4) applicateur de film comporte un ou deux axes distincts parallèles entre eux, chaque axe portant au moins une bobine.

16. Machine selon l'une des revendications 14 ou 15, **caractérisée par le fait que** les bobines sont activables individuellement ou par groupes de bobines.

17. Machine selon l'une des revendications 14 à 16, **caractérisée par le fait que** l'ensemble applicateur de film est mobile en approche ou éloignement des substrats à revêtir, ledit ensemble applicateur pouvant être déplaçable en translation pour s'ajuster aux dimensions du substrat ou de la hauteur de margeage du film.

18. Machine selon l'une des revendications 14 à 17, **caractérisée par le fait que** les bobines (8) sont montées de telle sorte que leur amorce (10) vienne s'appliquer contre la face du substrat (2) à revêtir après passage sur un rouleau applicateur (7).

19. Machine selon la revendication 18, **caractérisée par le fait qu'**à chaque rouleau applicateur (7) est associée une buse d'aspiration (11) escamotable disposée en aval dudit rouleau (7) du côté opposé au substrat (2), de telle sorte que l'amorce (10) soit aspirée contre ladite buse (11) pour être maintenue prête à être appliquée contre le substrat (2), la désactivation de ladite aspiration commandant l'application contre le substrat de l'amorce (10) du film (5) notamment par une face adhésive de celui-ci ou du fait de son caractère électrostatique.

20. Machine selon l'une des revendications 14 à 19, **caractérisée par le fait que** le moyen de découpe du film (5) est constitué par un fil chaud (12) escamotable lorsqu'il n'est pas en service, monté du côté opposé au substrat (2).

21. Machine selon l'une des revendications 14 à 20, **caractérisée par le fait qu'**à chaque bobine (8) est associé un rouleau (13) d'application du film (5) contre le substrat (2) après la découpe dudit film (5).

22. Machine selon l'une des revendications 14 à 21, **caractérisée par le fait que** chaque bobine (8) fait partie d'un module d'application de film comportant un rouleau de tension (9) du film (5) déroulé de la bobine (8) avant passage sur le rouleau applicateur (7), un dispositif de chargement d'une nouvelle bobine de film et de reboutage automatique du film étant avantageusement intégré audit module.

23. Machine selon l'une des revendications 14 à 22, **caractérisée par le fait qu'**au moins un axe de l'ensemble applicateur (4) est apte à recevoir différents jeux de bobines (8) de différentes largeurs de bande.

## Patentansprüche

1. Verfahren zur Ablage mindestens einer funktionellen Folie (5) auf mindestens einem Teil einer Fläche oder von zwei Flächen von ebenen oder gekrümmten Substraten (2), die Glasplatten sind, wobei das Verfahren die folgenden Schritte umfasst:
- man befördert die Substrate einzeln in eine Abgabestation, um diese gemäß ihrer Ebene oder mittleren Ebene durchlaufen zu lassen, wobei eine Baugruppe (4) für die Folienaufgabe mindestens eine Achse umfasst, die senkrecht zur Laufrichtung und parallel zur Laufebene ist, und auf der mindestens eine Spule (8) der Folie (5) gelagert ist, die in der Abgabestation angeordnet ist,
- in letzterer befördert man den Anfang (10) der Folie (5) jeder der Spulen (8), der auf einer Fläche des Substrats (2) aufgegeben und gehalten werden soll, an einen gewählten Platz, wobei die Spulen (8) mindestens teilweise in der Höhe einstellbar sind,
- man bewirkt das Abwickeln der Spule oder der Spulen (8) für die Aufgabe der Folie (5) in Bahnen auf das durchlaufende Substrat (2), dann
- zerschneidet man den oder die Folien (5) zu einem gewählten Zeitpunkt, und man behält den neuen Folienanfang (10), damit er bereit ist, an dem gewählten Platz auf demselben Substrat oder auf einem folgenden Substrat aufgegeben zu werden,
wobei die Bahnbreite jeder der Spulen und ihre Platzierung auf den Achsen in Abhängigkeit von den Bereichen der Substrate, die von den Folien zu bedecken sind, gewählt sind, wobei das Verfahren in einer Randfestlegung am Umfang der Glasplatten ohne nachträgliches Abschneiden der Folie endet.

2. Verfahren nach Anspruch 1, **dadurch gekennzeichnet, dass** man eine Baugruppe zur Aufgabe (4) verwendet, die eine Achse umfasst, auf der mindestens eine Folienspule (8) gelagert ist, die somit das Auftragen auf der Fläche des Substrats (2) von so vielen parallelen Bändern oder Bahnen in Richtung der Laufrichtung des Substrats (2) ermöglicht, wie Spulen (8) vorhanden sind, wobei der Anfang und das Ende jedes Bandes genau über dem Substrat positioniert sind, wobei die Bänder voneinander beabstandet sind, und wobei die Aufgabe der Bänder im Laufe des Durchlaufens eines Substrats unterbrochen und auf demselben Substrat (2) wieder aufgenommen werden kann.

3. Verfahren nach Anspruch 1, **dadurch gekennzeichnet, dass** man eine Baugruppe zur Auftgabe (4) verwendet, die mindestens zwei parallele Achsen aufweist, wobei jede Achse mindestens eine Spule (8) trägt, wobei mindestens eine von einer Achse getragene Spule (8) in ihrer Position in Bezug zu mindestens einer Spule (8), die von der benachbarten Achse getragen wird, versetzt ist, wodurch ermöglicht wird, auf einer Fläche des Substrats so viele Bänder oder Bahnen parallel zur Laufrichtung des Substrats aufzutragen, wie Spulen (8) vorhanden sind, wobei der Anfang und das Ende jedes Bandes genau über dem Substrat (2) positioniert sind, wobei die Bänder sich gemäß der Platzierung von zwei benachbarten Spulen mit ihren zwei Achsen überlappen können, und wobei das Auftragen der Bänder auf demselben Substrat unterbrochen und im Laufe seines Durchlaufens wieder aufgenommen werden kann.

4. Verfahren nach einem der Ansprüche 1 bis 3, **dadurch gekennzeichnet, dass** man die Substrate (2) in der Beschichtungsstation vertikal oder in einer in Bezug zur Vertikalen leicht geneigten Position bewegt.

5. Verfahren nach einem der Ansprüche 1 bis 3, **dadurch gekennzeichnet, dass** man die Substrate (2) horizontal in der Beschichtungsstation bewegt.

6. Verfahren nach einem der Ansprüche 1 bis 5, **dadurch gekennzeichnet, dass** man eine abziehbare, eine klebende, teilweise klebende, in vorgeschnittenen Bereichen klebende funktionelle Folie oder eine funktionelle Folie vom Abziehtyp verwendet.

7. Verfahren nach einem der Ansprüche 1 bis 6, **dadurch gekennzeichnet, dass** man eine funktionelle Folie verwendet, die ausgewählt ist aus Schutzfolien, dekorativen Folien, Folien, die Informationen umfassen und Folien zur mechanischen Verstärkung.

8. Verfahren nach einem der Ansprüche 1 bis 7, **dadurch gekennzeichnet, dass** man die Beschichtung von Platten aus monolithischem Glas, Verbundglas oder für Mehrfachverglasungen verwirklicht, die auf mindestens einer Fläche eine funktionelle Schicht aufweisen, beispielsweise eine schmutzabweisende Schicht, eine Bruchschutzschicht, einen Oberflächenbehandlungsfilm, wobei die Glasplatten eben sind oder gebogene oder gekrümmte Flächen aufweisen, wobei die Platten dazu bestimmt sind, Scheiben zu bilden, oder zugeschnitten zu werden, um Scheiben zu erhalten, oder dazu bestimmt sind, Windschutzscheiben oder Scheiben von Kraftfahrzeugen zu bilden.

9. Verfahren nach Anspruch 8, wobei man die Beschichtung der ebenen Glasplatten verwirklicht, die dazu bestimmt sind, zugeschnitten zu werden, um Scheiben zu bilden, **dadurch gekennzeichnet, dass** man das Auftragen von Bahnen von abziehbarem Schutzfilm gemäß der in Anspruch 2 bestimmten Weise verwirklicht, damit die nicht bedeckten Bereiche in einem Gitter angeordnet sind, wobei jeder von einer Bahn bedeckte Bereich dem Klarsichtbereich einer Scheibe entspricht, und die nicht bedeckten Bereiche dazu bestimmt sind, den direkten Zuschnitt des Glases zu ermöglichen, um die Ränder der Scheiben zu bilden, die dazu bestimmt sind, in die Fugen der Fensterrahmen eingebracht zu werden und durch Deckleisten verdeckt zu werden.

10. Verfahren nach Anspruch 8, wobei man die Beschichtung gekrümmter Substrate durchführt, **dadurch gekennzeichnet, dass** man eine Folie auswählt, deren Dehnfähigkeitseigenschaften es ermöglicht, diese auf allen zum Auftragen vorgesehenen Bereichen aufzutragen, und/oder dadurch, dass man die Breite der Spulen und folglich der Bahnen in Abhängigkeit vom Krümmungsradius regelt, wobei die Breite der Bahnen umso geringer wird, je kleiner der Krümmungsradius ist.

11. Verfahren nach einem der Ansprüche 1 bis 10, **dadurch gekennzeichnet, dass** es die Arbeitsvorgänge umfasst, die aus Folgendem bestehen:
- Bestimmen für jedes der Substrate, in Abhängigkeit von seiner Bestimmung und auf mindestens einer äußeren Fläche davon, des oder der Bereiche, die eine Folie erhalten sollen und des oder der Bereiche, die nicht von der Folie bedeckt werden müssen;
- Bewegen der Substrate nacheinander in der Beschichtungsstation und Steuern des Folienauftragens für jedes davon in den Bereichen, die dazu bestimmt sind, eine solche Folie zu erhalten; und
- Sammeln der so bedeckten Substrate.

12. Verfahren nach Anspruch 11, **dadurch gekennzeichnet, dass** man durch maschinengestützte Berechnung eine Optimierung der Positionierung der Folie auf den verschiedenen Substraten in der Abfolge der Substrate in Abhängigkeit von der Abmessung der Substrate und der relativen Position der Bereiche, die bedeckt werden sollen, und der Bereiche, die nicht bedeckt werden sollen, verwirklicht.

13. Verfahren nach Anspruch 12, **dadurch gekennzeichnet, dass** man die Optimierung überdies in Abhängigkeit von der Ausrüstung der Spulen und der verschiedenen Spulen, die die Ausrüstung aufzunehmen geeignet ist, verwirklicht.

14. Beschichtungsvorrichtung zur Durchführung des Verfahrens, wie es in einem der Ansprüche 1 bis 13 definiert ist, umfassend:
- eine Struktur (1) zum Stützen und aufeinander folgenden Transfer der zu schützenden Platten entlang ihrer Ebene oder mittleren Ebene;
- eine Baugruppe (4) zum Auftragenvon Film, die mindestens eine Achse umfasst, die senkrecht zur vorgesehenen Laufrichtung der Substrate und parallel zur Laufebene ist, wobei auf der Achse mindestens eine Spule (8) Film derart gelagert sein kann, dass der Anfang des Films (5) beim Transfer des zu bedeckenden Substrats (2) auf die Fläche des Substrats (2) aufgetragen wird, wobei die Baugruppe (4) geeignet ist, für jedes Substrat (2) im Laufe des Transfers Spulen (8) in der benötigten Anzahl und von gewählter Bahnbreite aufzunehmen, um auf jedem Substrat (2) die vorgesehene Beschichtung in Bahnen zu bilden;
- Mittel zum Steuern des Auftragens des Anfangs (10) des Films (5) einer Spule auf dem Substrat zu jedem gewollten Zeitpunkt; und
- Mittel zum Schneiden des Streifens am Ende des Auftragens zu jedem gewollten Zeitpunkt, wobei die Mittel vorgesehen sind, um den neuen Anfang, der nach dem Schnitt gebildet wird, zu halten, damit er bereit ist, erneut aufgetragen zu werden, wobei die Vorrichtung **dadurch gekennzeichnet ist, dass** die Spulen (8) mindestens teilweise in der Höhe einstellbar sind, um für jedes Substrat (2) die vorgesehene Beschichtung mit Bahnen zu bilden.

15. Vorrichtung nach Anspruch 14, **dadurch gekennzeichnet, dass** eine Baugruppe (4) zum Auftragen von Film ein oder zwei getrennte zueinander parallele Achsen umfasst, wobei jede Achse mindestens eine Spule trägt.

16. Vorrichtung nach einem der Ansprüche 14 oder 15, **dadurch gekennzeichnet, dass** die Spulen einzeln oder in Gruppen von Spulen aktivierbar sind.

17. Vorrichtung nach einem der Ansprüche 14 bis 16, **dadurch gekennzeichnet, dass** die Baugruppe zum Auftragen von Film in Annäherung an oder Entfernung von den zu bedeckenden Substraten beweglich ist, wobei die Baugruppe zum Auftragen translatorisch verschiebbar sein kann, um sich auf die Abmessungen des Substrats oder die Höhe der Randfestlegung des Films einzustellen.

18. Vorrichtung nach einem der Ansprüche 14 bis 17, **dadurch gekennzeichnet, dass** die Spulen (8) derart gelagert sind, dass ihr Anfang (10) nach dem Durchlaufen über eine Rolle zum Auftragen (7) auf die Fläche des zu bedeckenden Substrats (2) aufgetragen wird.

19. Vorrichtung nach Anspruch 18, **dadurch gekennzeichnet, dass** jeder Rolle zum Auftragen (7) eine einziehbare Saugdüse (11) zugeordnet ist, die der Rolle (7) nachgelagert auf der dem Substrat (2) gegenüberliegenden Seite derart angeordnet ist, dass der Anfang (10) gegen die Düse (11) gesaugt wird, um bereit gehalten zu werden, auf das Substrat (2) aufgetragen zu werden, wobei die Abschaltung des Saugens das Auftragen des Anfangs (10) des Films (5) auf das Substrat insbesondere durch eine klebende Seite davon oder durch seine elektrostatischen Eigenschaften steuert.

20. Vorrichtung nach einem der Ansprüche 14 bis 19, **dadurch gekennzeichnet, dass** das Mittel zum Schneiden des Films (5) aus einem Heizdraht (12) besteht, der einziehbar ist, wenn er nicht im Einsatz ist, der auf der dem Substrat (2) gegenüberliegenden Seite angebracht ist.

21. Vorrichtung nach einem der Ansprüche 14 bis 20, **dadurch gekennzeichnet, dass** jeder Spule (8) eine Rolle (13) zum Auftragen des Films (5) gegen das Substrat (2) nach dem Schneiden des Films (5) zugeordnet ist.

22. Vorrichtung nach einem der Ansprüche 14 bis 21, **dadurch gekennzeichnet, dass** jede Spule (8) Teil eines Moduls zum Auftragen von Film ist, das eine Rolle (9) zum Spannen des von der Spule (8) abgewickelten Films (5) vor dem Übergang auf die Rolle (7) zum Auftragen umfasst, wobei eine Vorrichtung zum Laden einer neuen Spule Film und zur automatischen Ausrichten des Films vorteilhafterweise in das Modul integriert sind.

23. Vorrichtung nach einem der Ansprüche 14 bis 22, **dadurch gekennzeichnet, dass** mindestens eine Achse der Baugruppe (4) zum Auftragen geeignet ist, verschiedenen Sätze von Spulen (8) verschiedener Bahnbreiten aufzunehmen.

## Claims

1. A method for depositing at least one functional film (5) on at least a part of one face or of both faces of flat or curved substrates (2) which are glass sheets, the method comprising the following steps:
- the substrates are led one by one into a film-coating station so as to be advanced therein along their plane or mean plane, a film applicator unit (4), comprising at least one axis which is perpendicular to the direction of advancement and parallel to the plane of advancement and on which there is mounted at least one reel (8) of film (5), being disposed in said film-coating station,
- in this station, the leader (10) of the film (5) of each of the reels (8) is brought to be applied to and held against one face of the substrate (2) at a chosen location, said reels (8) being at least partially adjustable in height,
- the unwinding of the reel or reels (8) of film is triggered with a view to the film (5) being applied in strip(s) to the advancing substrate (2), then
- the film or films (5) is/are cut at a chosen moment and the new film leader (10) is held so that it is ready to be applied at the chosen location on the same substrate, or on a following substrate,
the band width of each of the reels and their location on the axes being chosen as a function of the regions of the substrates which are to be covered by the films, said method resulting in a peripheral margination of the glass sheets with no subsequent cutting of the film.

2. The method as claimed in claim 1, **characterized in that** an applicator unit (4) is used comprising an axis on which there is mounted at least one reel (8) of film (5), whereby on one face of the substrate (2), in the direction of advancement of the substrate (2), as many parallel bands or strips can be applied as there are reels (8), the beginning and the end of each band being precisely positioned on said substrate, said bands being mutually spaced apart and the application of the bands being able to be halted and resumed on one and the same substrate (2) in the course of its advancement.

3. The method as claimed in claim 1, **characterized in that** an applicator unit (4) is used comprising at least two parallel axes, each axis bearing at least one reel (8), at least one reel (8) borne by an axis being staggered relative to at least one reel (8) borne by the neighboring axis, whereby on one face of the substrate, in the direction of advancement of the substrate, as many parallel bands or strips can be applied as there are reels (8), the beginning and the end of each band being precisely positioned on said substrate (2), said bands being able to overlap according to the location of two neighboring reels on their two axes and the application of the bands being able to be halted and resumed on one and the same substrate in the course of its advancement.

4. The method as claimed in one of claims 1 to 3, **characterized in that** the substrates (2) are fed into the film-coating station vertically or in a position slightly inclined relative to the vertical.

5. The method as claimed in one of claims 1 to 3, **characterized in that** the substrates (2) are fed horizontally into the film-coating station.

6. The method as claimed in one of claims 1 to 5, **characterized in that** a functional film is used which is peelable, bonded, partially bonded, bonded on precut zones, or of the decal transfer type.

7. The method as claimed in one of claims 1 to 6, **characterized in that** a functional film is used which is chosen from amongst protective films, decorative films, information-carrying films and mechanical reinforcement films.

8. The method as claimed in one of claims 1 to 7, **characterized in that** the coating of glass sheets is realized, in particular of sheets of monolithic or laminated glass or glass for multiple glazings, having, on at least one face, a functional layer, such as a dirt-repellant layer, a shatterproof layer, a surfacing film, said glass sheets being flat or with rounded or curved faces, said sheets being intended to form panes or to be cut to obtain panes or being intended to form windshields or automobile windows.

9. The method as claimed in claim 8, in which the coating is carried out on flat glass sheets intended to be cut to form panes, **characterized in that** the application of peelable protective film strips is carried out in the manner defined in claim 2 so that the uncoated zones are arranged in a grid pattern, each zone coated by a strip corresponding to the daylight of a pane, and the uncoated zones being intended to allow the direct cutting of the glass forming the margins of the panes intended to be introduced into the rabbets of the frames and to be hidden from view by glazing beads.

10. The method as claimed in claim 8, in which the coating is performed of curved substrates, **characterized in that** a film is chosen, the extensibility properties of which allow it to be applied to all of the planned application regions and/or that the width of the reels and hence of the strips is regulated as a function of the radius of curvature, the width of the strips being all the less the smaller the radius of curvature.

11. The method as claimed in one of claims 1 to 10, **characterized in that** it comprises the operations consisting in:
- defining for each of the substrates, as a function of its intended purpose and on at least one outer face of said substrate, the region or regions which are due to receive a film and the region or regions which do not need to be coated by the film;
- feeding said substrates successively into the film-coating station and commanding, for each of them, the application of film in the regions intended to receive such a film; and
- gathering the substrates which are thus coated.

12. The method as claimed in claim 11, **characterized in that**, by computerized calculation, an optimization of the positioning of the film on the different substrates of the succession of substrates is realized as a function of the dimension of the substrates and the relative position of the regions due to be coated and the regions not due to be coated.

13. The method as claimed in claim 12, **characterized in that** the optimization is equally realized as a function of the fitment of the reels and the different reels which said fitment is capable of receiving.

14. A film-coating machine for implementing the method as defined in one of claims 1 to 13, comprising:
- a supporting and successive transfer structure (1) for the sheets to be protected, along their plane or their mean plane;
- a film applicator unit (4) comprising at least one perpendicular axis in the planned direction of advancement of the substrates and parallel to the plane of advancement, an axis on which at least one reel (8) of film is capable of being mounted in such a way that the leader of the film (5) proceeds to apply itself to the face of the substrate (2) to be coated as this face is transferred, said unit (4) being capable of receiving for each substrate (2) in the course of transfer the necessary number of reels (8) and of a band width chosen to form on each substrate (2) the planned coating in strips;
- means for commanding, at any desired moment, the application of the leader (10) of the film (5) of a reel to the substrate; and
- means for cutting the band at any desired moment once application is finished, means being provided for holding the new leader formed after the cutting of the band so that it is ready to be re-applied, said machine being **characterized in that** said reels (8) are at least partially adjustable in height so as to form on each substrate (2) the planned coating in strips.

15. The machine as claimed in claim 14, **characterized in that** a film applicator unit (4) comprises one or two separate, mutually parallel axes, each axis bearing at least one reel.

16. The machine as claimed in either of claims 14 or 15, **characterized in that** the reels are activable individually or by groups of reels.

17. The machine as claimed in one of claims 14 to 16, **characterized in that** the film applicator unit is movable toward or away from the substrates to be coated, said applicator unit being able to be displaceable in translation in order to adjust to the dimensions of the substrate or of the make up height of the film.

18. The machine as claimed in one of claims 14 to 17, **characterized in that** the reels (8) are mounted in such a way that their leader (10) proceeds to apply itself to the face of the substrate (2) to be coated after passing over an applicator roll (7).

19. The machine as claimed in claim 18, **characterized in that** with each applicator roll (7) is combined a retractable suction nozzle (11) disposed downstream of said roll (7) on the side opposite the substrate (2), such that the leader (10) is sucked against said nozzle (11) in order to be held ready to be applied to the substrate (2), the deactivation of said suction commanding the application to the substrate of the leader (10) of the film (5), especially by an adhesive face of said film or by dint of its electrostatic nature.

20. The machine as claimed in one of claims 14 to 19, **characterized in that** the cutting means for the film (5) is constituted by a hot wire (12) which is retractable when not in use and is mounted on the side opposite the substrate (2).

21. The machine as claimed in one of claims 14 to 20, **characterized in that** with each reel (8) is combined a roll (13) for applying the film (5) to the substrate (2) following the cutting of said film (5).

22. The machine as claimed in one of claims 14 to 21, **characterized in that** each reel (8) forms part of a film-application module comprising a tension roll (9) for tensioning the film (5) unwound from the reel (8) prior to passing over the applicator roll (7), a device for loading a new reel of film and for automatically repositioning the film advantageously being incorporated in said module.

23. The machine as claimed in one of claims 14 to 22, **characterized in that** at least one axis of the applicator unit (4) is capable of receiving various sets of reels (8) of various band widths.
